Europäisches Patentamt

European Patent Office

Office européen des brevets

(11) Veröffentlichungsnummer : **0 036 564**
**B1**

(12) **EUROPÄISCHE PATENTSCHRIFT**

(45) Veröffentlichungstag der Patentschrift :
**13.06.84**

(21) Anmeldenummer : **81101789.6**

(22) Anmeldetag : **11.03.81**

(51) Int. Cl.³ : **B 01 J  8/44, F 28 D  13/00**

(54) **Anordnung am Boden eines fluidisierbaren Bettes.**

(30) Priorität : **21.03.80 SE 8002199**

(43) Veröffentlichungstag der Anmeldung :
**30.09.81 Patentblatt 81/39**

(45) Bekanntmachung des Hinweises auf die Patenterteilung : **13.06.84 Patentblatt 84/24**

(84) Benannte Vertragsstaaten :
**CH DE FR GB LI**

(56) Entgegenhaltungen :
**DE-A- 2 740 054**
**DE-B- 1 216 849**
**GB-A- 1 120 003**
**US-A- 1 691 609**
**US-A- 3 814 178**

(73) Patentinhaber : **ASEA AB**
**S-721 83 Västeras (SE)**

(72) Erfinder : **Löfgren, Lars**
**Farhagsvägen 68**
**S-58321 Linköping (SE)**
Erfinder : **Östlund, Artur**
**Fjärilsvägen 12**
**S-582 58 Linköping (SE)**

(74) Vertreter : **Boecker, Joachim, Dr.-Ing.**
**Rathenauplatz 2-8**
**D-6000 Frankfurt a.M. 1 (DE)**

## Beschreibung

Die Erfindung betrifft eine Anordnung am Boden eines fluidisierbaren Bettes gemäß dem Oberbegriff des Anspruches 1. Eine solche Anordnung ist bekannt aus Fig. 2 der GB-A-1 120 003.

Bei fluidisierbaren Betten, die unter Druck und mit hohen Temperaturen des Trägergases einerseits und des Bettmaterials andererseits arbeiten, treten verschiedene Probleme auf, und zwar sowohl hinsichtlich der Temperatur wie der Festigkeit des Verteilersystems für die Zufuhr von Trägergas zum Bett. Ein Beispiel für die Verwendung eines solchen fluidisierbaren Bettes ist der Reaktor bei dem Reduktionsprozeß für Eisenoxid, der in der schwedischen Patentschrift 7213630-2 (entsprechende britische Patentschrift 1 386 452) beschrieben wird.

Aus der GB-A-1 120 003 ist eine Anordnung der eingangs genannten Art bekannt, bei dem die unter dem fluidisierbaren Bett angeordnete Verteilerkammer in ein die Verteilerkammer mit Abstand umgebendes Gehäuse eingebaut ist, welches von Kühlluft durchströmbar ist, um ein hitzeempfindliches Fluidisierungsgas gegen Erhitzung zu schützen.

Das der Erfindung zugrundeliegende Problem besteht demgegenüber darin, eine zu starke Erhitzung des druckbeanspruchten Materials unterhalb des Reaktorraumes durch die vom Reaktor und von dem zugeführten heißen Fluidisierungsgas ausgehenden Wärme zu verhindern.

Der Erfindung liegt die Aufgabe zugrunde, eine Anordnung der eingangs genannten Art zu entwickeln, bei der das Verteilersystem für das Trägergas temperaturmäßig und festigkeitsmäßig keinen extremen Beanspruchungen ausgesetzt ist.

Zur Lösung dieser Aufgabe wird eine Anordnung nach dem Oberbegriff des Anspruches 1 vorgeschlagen, die erfindungsgemäß die im kennzeichnenden Teil des Anspruches 1 genannten Merkmale hat.

Vorteilhafte Weiterbildungen der Erfindung sind in den Unteransprüchen genannt.

Dank der erfindungsgemäßen Anordnung können alle druckbeanspruchten Teile des Verteilersystems wirksam gegen Hitze isoliert werden, und die Dichtungen an den Düsen für das Fluidisierungsgas brauchen nur dem Druck standzuhalten, der durch den Druckabfall an den Düsen verursacht wird.

Anhand der in den Figuren gezeigten Ausführungsbeispiele soll die Erfindung näher erläutert werden. Es zeigen:

Figur 1 eine Düsendurchführung durch den Boden eines fluidisierbaren Bettes,

Figur 2 in vergrößerter und detaillierterer Form die Befestigung einer Düse in einer Anordnung gemäß Figur 1 (siehe den mit A bezeichneten Kreis in Figur 1).

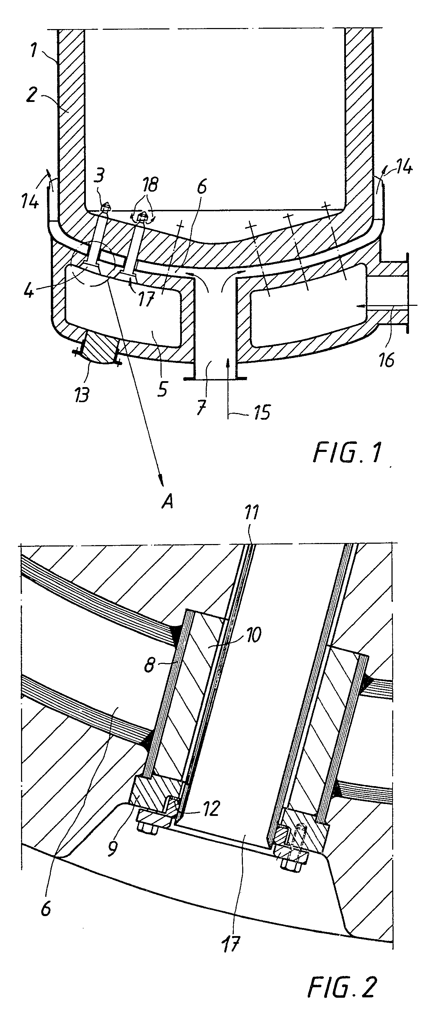

Figur 1 zeigt das Bodenteil eines fluidisierbaren Bettes, das inwendig mit einem wärmeisolierenden Material 2 versehen ist. Der Mantel des Bettes, der zweckmäßigerweise metallisch ist, ist mit 1 bezeichnet. Im Boden dieses fluidisierbaren Bettes sind mehrere Düsen 3 angeordnet, die durch den Mantel und das wärmeisolierende Material 2 im Boden des Bettes hindurchgehen. Wie bereits eingangs erwähnt, kann dieser Boden ein Teil eines Reaktors sein. Die Eintrittsöffnung 4 der Düsen mündet in eine Verteilerkammer 5, die inseitig wärmeisoliert ist. Die Verteilerkammer 5 ist derart mit dem Bettboden verbunden, daß ein spalt-, kanal- oder scheibenförmiger Raum 6 zwischen den beiden Einheiten gebildet wird. Durch diesen Raum 6 strömt Kühlluft, die über einen Kanal 7 in Richtung des Pfeiles 15 zugeführt wird. In gewissen Fällen kann auch ein anderes Kühlmittel als Luft, z. B. Wasser, verwendet werden. Fluidisierungs- oder Trägergas wird in Richtung des Pfeils 16 zugeführt; dieses Gas muß unter einem gewissen Druck stehen, damit im Bett ein Fluidisierungseffekt entsteht.

Figur 2 zeigt die Ausführung der Verbindung zwischen den beiden Einheiten. Ein Rohr 8 ist in den beiden Teilen zu beiden Seiten des kühlluftführenden Raumes 6 festgeschweißt, und in dem Teil, der in die Verteilerkammer 5 mündet, ist das Rohr mit einem Flansch 9 versehen. Das Rohr ist inwendig mit einer Wärmeisolierung 10 versehen, und die Düse selbst mit dem Düsenrohr 11 ist gebördelt und mit einer hochfeuerfesten Packung 12 am Flansch 9 abgedichtet.

Für die Kühlluft oder ein anderes Kühlmittel sind an den Stellen der Pfeile 14 Austrittsöffnungen vorhanden, und durch geeignete Anbringung dieser Austrittsöffnungen kann man eventuell eine Selbstzirkulation der Kühlluft erzielen. Natürlich kann die Zirkulation auch erzwungen werden, indem im Kühlmittel mit Hilfe einer Pumpe, eines Kompressors oder dergleichen ein Zirkulationsdruck erzeugt wird. Das Fluidisierungsgas tritt an den mit den Pfeilen 18 bezeichneten Stellen in das Bett ein und wird an der mit 17 bezeichneten Stelle von der Verteilerkammer aus in die Düsen hineingeblasen. Selbstverständlich können mehr als eine Verteilerkammer 5 vorhanden sein.

Mit der vorstehend beschriebenen Konstruktion können alle drucktragenden Teile wirksam gegen Wärme isoliert werden, und die Packungen für die Düsen 3, 4 brauchen beispielsweise nur dem Druck standzuhalten, der durch den Druckabfall an den Düsen 3, 4 auftritt. In der Verteilerkammer 5 können zweckmäßig plazierte Luken 13 angeordnet werden, über welche die Düsen ausgetauscht werden können, ohne daß man das Bett von innen zu betreten braucht. Außerdem dienen diese Luken 13 zu Kontrollzwecken.

Wie bereits erwähnt, können die Kühlluft leitenden Räume 6 als Kanäle, Spalten oder scheibenförmig ausgebildet sein, wobei deren Erstreckung zumindest überwiegend radial gerichtet ist und parallel zum Boden des Bettes verläuft. Geeignetes Fluidisierungsgas ist $CO_2$ oder $N_2$, und Luft ist ein wichtiges Kühlmittel. Die Ausführungsform gemäß Figur 1 zeigt sechs Düsen. Die Düsenzahl kann natürlich in einem weiten Bereich variieren, und das Gleiche gilt für die Verteilung der Düsen über den Boden des Bettes. Das fluidisierbare Material ist pulver-, korn- oder granulatförmig und wird mit Hilfe des eingeblasenen Fluidisierungsgases schwebend gehalten (siehe Pfeil 18).

## Ansprüche

1. Anordnung am Boden eines fluidisierbaren Bettes für pulver-, korn- oder granulatförmiges Material mit mindestens einem unterhalb des Bettes vorhandenen Raum (6), der mindestens einen unterhalb des Bodens des Bettes liegenden Einlaß (7) für Kühlluft oder ein anderes Kühlmittel aufweist und mindestens eine Austrittsöffnung für das Kühlmittel besitzt, sowie mit einer oder mehreren Verteilerkammern (5) für das Fluidisierungsgas, von denen Düsen (3) ausgehen, die durch den Raum (6) verlaufen und durch den Boden des Bettes gezogen sind, dadurch gekennzeichnet, daß der Raum (6) zwischen dem Boden des Bettes und der oder den Verteilerkammern (5) liegt, im wesentlichen parallel zum Boden des Bettes angeordnet und kanal-, spalt- oder scheibenförmig ausgebildet ist und daß die Austrittsöffnung/en (14) an der Seite des fluidisierbaren Bettes mündet/en.

2. Anordnung nach Anspruch 1, dadurch gekennzeichnet, daß die Kammern (5) inseitig wärmeisoliert sind.

3. Anordnung nach Anspruch 1 oder 2, dadurch gekennzeichnet, daß die Düsen austauschbar sind.

4. Anordnung nach einem der vorhergehenden Ansprüche, dadurch gekennzeichnet, daß in der Kammer oder den Kammern (5) für Fluidisierungsgas Luken (13) zur Kontrolle und zum Austausch von Düsen (3, 4) angebracht sind.

## Claims

1. Arrangement at the bottom of a fluidized bed for powdered, particulate or granular material with at least one space (6) arranged below the bed, said space being provided with at least one inlet (7) for cooling air or another coolant below the bottom of the bed and with at least one outlet for the coolant, with one or more distribution chambers (5) for fluidized gas, and with nozzles (3) extending from said distribution chambers (5) passing through space (6) and penetrating the bottom of the bed, characterised in that said space (6) is located between the bottom of the bed and the one or more distribution chambers (5), is arranged substantially parallel to the bottom of the bed and has a channel-, gap- or disk-like shape, and that the outlet(s) (14) is/are opening out at the side of the fluidized bed.

2. Arrangement according to claim 1, characterised in that said chambers (5) are heat-insulated on the inside.

3. Arrangement according to claim 1 or 2, characterised in that the nozzles are replaceable.

4. Arrangement according to any of the preceding claims, characterised in that the chamber or the chambers (5) for the fluidizing gas are provided with manholes (13) for inspecting or replacing the nozzles (3, 4).

## Revendications

1. Agencement au fond d'un lit fluidisé pour de la matière sous forme de poudre, de grains ou de granulés, comprenant au moins un espace (6), qui se trouve sous le lit et qui possède au moins une entrée (7) pour de l'air réfrigérant ou pour un autre agent réfrigérant en-dessous du fond du lit et au moins une ouverture de sortie pour l'agent réfrigérant, ainsi que, pour répartir le gaz de fluidisation, une ou plusieurs chambres (5) dont partent des buses (3) qui s'étendent dans l'espace (6) et qui passent à travers le fond du lit, caractérisé en ce que l'espace (6) est compris entre le fond du lit et la (ou les) chambre(s) de répartition, est disposée sensiblement parallèlement au fond du lit et est agencée en forme de canal, de fente ou de disque et en ce que la (ou les) ouverture(s) de sortie (14) débouche sur le côté du lit fluidisé.

2. Agencement suivant la revendication 1, caractérisé en ce que les chambres (5) sont calorifugées du côté intérieur.

3. Agencement suivant la revendication 1 ou 2, caractérisé en ce que les buses peuvent être remplacées.

4. Agencement suivant l'une des revendications précédentes, caractérisé en ce que pour le contrôle et pour le remplacement des buses (3, 4), des ouvertures (13) sont montées dans la chambre ou dans les chambres (5) pour le gaz de fluidisation.

FIG.1

FIG.2